# EUROPÄISCHE PATENTSCHRIFT

(11) **EP 3 575 661 B1**
(45) Veröffentlichungstag und Bekanntmachung des Hinweises auf die Patenterteilung: **12.07.2023**
(21) Anmeldenummer: 19172691.8
(22) Anmeldetag: 06.05.2019
(51) Int. Cl.: F16L 43/02, E03B 7/00, E03B 7/07

(54) **SPÜL- UND PROBENAHMEVORRICHTUNG FÜR EINEN WASSERHAUSANSCHLUSS**
RINSING AND SAMPLING DEVICE FOR A DOMESTIC WATER CONNECTION
DISPOSITIF DE RINÇAGE ET D'ÉCHANTILLONNAGE POUR UNE PRISE D'EAU INDIVIDUELLE

(30) Priorität: 30.05.2018 DE 102018112932
(43) Veröffentlichungstag der Anmeldung: 04.12.2019
(73) Patentinhaber: REWAG Regensburger Energie- und Wasserversorgung AG & Co. KG, 93055 Regensburg (DE)
(72) Erfinder: Lechner, Benno, 93057 Regensburg (DE)
(74) Vertreter: Glück Kritzenberger Patentanwälte PartGmbB

(56) Entgegenhaltungen:
- EP-A1- 3 187 761
- AT-U1- 8 298
- CN-A- 107 965 629
- CN-U- 205 278 645
- DE-A1- 2 310 643
- US-A- 3 825 286

## Beschreibung

### Technisches Gebiet

Die Erfindung bezieht sich auf eine Spül- und Probenahmevorrichtung für einen Wasserhausanschluss.

### Stand der Technik

Zur Wasserversorgung von Gebäuden sind diese in der Regel über Wasserversorgungsanschlüsse bzw. Wasserhausanschlüsse an eine zentrale Wasserversorgung angeschlossen. Im Rahmen einer Fertigstellung oder Sanierung derartiger Wasserhausanschlüsse ist es notwendig diese Anschlüsse nach den Regeln der Technik in Betrieb zu nehmen. Dabei ist eine Spülung der Anschlussleitung mit hinreichender Fließgeschwindigkeit und mehrfachem Wasserwechsel notwendig. Ab bestimmten Querschnitten und Leitungslängen der Anschlüsse sind zusätzlich Desinfektionsmaßnahmen durchzuführen. Zur Kontrolle der Wirksamkeit der ausgeführten Arbeiten sind ferner mikrobiologische Kontrolluntersuchungen, beispielsweise so genannte Beprobungen notwendig.

Nach Abschluss der erforderlichen baulichen Maßnahmen zur Erstellung oder Sanierung von Wasserhausanschlüssen muss daher vor Inbetriebnahme neuer oder sanierter Wasserversorgungsanschlüsse sichergestellt werden, dass keine schädigenden Fest- oder Schmutzstoffe bzw. Verunreinigungen, auch mikrobiologischer Art im Rohrleitungssystem des Wasserhausanschlusses vorhanden sind.

Zu diesem Zweck sind Vorrichtungen zum Spülen von Wasserhausanschlüssen bekannt. Mittels derartiger Vorrichtungen kann Wasser aus der zentralen Versorgungsleitung in den Hausanschluss eingeleitet werden, welches dann den Wasserhausanschluss durchströmt und als Spülwasser dient. Dieses Spülwasser kann mittels der Vorrichtungen der genannten Art wieder ausgetragen werden, ohne dabei in die hausinterne Wasserleitungsinfrastruktur einzuströmen.

Beispielsweise ist aus der DE 195 00 848 C1 eine Adapterarmatur bekannt, mit welcher ein Spülen und eine Notversorgung eines Wasserhausanschlusses möglich ist, wobei die Adapterarmatur dazu anstelle des in dem Wasserhausanschluss vorgesehenen Wasserzählers in die Installation des Wasserhausanschlusses eingesetzt wird. Die Adapterarmatur weist einen rohrartigen Bereich mit einem Zuführende und einem Abführende auf, wobei von dem rohrartigen Bereich zwei rechtwinkelig abgehende Abgänge abzweigen. Zwischen den beiden Abgängen ist der rohrartige Bereich innenseitig durch eine Trennwand unterbrochen. Im Spülbetrieb kann Wasser aus der Versorgungsleitung in den Wasserhausanschluss eingeleitet und damit auch der Adapterarmatur zugeführt werden, wobei das eingeströmte Spülwasser über den auf das Zuführende folgenden Abgang der Adapterarmatur wieder abgenommen wird.

Problematisch bei der beschriebenen Adapterarmatur der DE 195 00 848 C1 ist jedoch, dass das Spülwasser im Spülbetrieb zunächst in Achsrichtung des rohrartigen Bereiches in diesen einströmt und zwar bis zur Trennwand, wo der Spülwasserstrom abrupt abgebremst und senkrecht zur Achsrichtung des rohrartigen Bereiches in Richtung des Ausströmweges umgelenkt werden muss. Dies kann nachteilig zu einer verlangsamten Ausschleusung von Schmutzpartikeln bzw. zur Ablagerung und erneuten Aufwirbelung der auszuspülenden Schmutzpartikel im Bereich der Trennwand führen.

Daneben sind grundsätzlich auch gebogene oder verzweigte Verbindungsstücke oder Anschlussstücke bekannt, die in Wasserleitungen verwendet werden. So beschreibt beispielsweise die CN 205278645 U eine im Wesentlichen Y-förmige Pufferkammer für Klärschlammfallrohre. Aus der EP 3 187 761 A1 geht ein gebogener Rohrabschnitt mit Stützvorrichtung hervor. Beispielsweise beschreibt auch die AT 008 298 U1 ein als Rohrkrümmer ausgebildetes Anschlussstück für den Anschluss einer etwa lotrecht verlaufenden Standsäule eines Hydranten an eine rechtwinkelig dazu verlaufende Versorgungsleitung. Aus der US 3 825 286 A ist eine Ableitvorrichtung in Form eines T-Stücks bekannt.

Daher besteht weiterhin Bedarf an einfach aufgebauten und leicht in Wasserhausanaschlüsse integrierbare Spül- und Probenahmevorrichtungen für Wasserhausanschlüsse.

### Darstellung der Erfindung

Aufgabe der vorliegenden Erfindung ist es daher eine Spül- und Probenahmevorrichtung für einen Wasserhausanschluss zur Verfügung zu stellen, die die Nachteile des Standes der Technik überwindet und die insbesondere einfach im Aufbau ist und mit geringst möglichem technischen Aufwand in einen bestehenden Wasserhausanschluss eingesetzt werden kann. Diese Aufgabe wird erfindungsgemäß durch die Vorrichtung gemäß unabhängigem Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung stellt eine Spül- und Probenahmevorrichtung für einen Wasserhausanschluss, nämlich zur Verwendung in einem Wasserhausanschluss zum Spülen des Wasserhausanschlusses sowie zur Entnahme von Wasserproben zur Verfügung, wobei die Spül- und Probenahmevorrichtung zur Montage zwischen einer ersten und einer zweiten Absperrarmatur des Wasserhausanschlusses ausgebildet ist. Die erfindungsgemäße Spül- und Probenahmevorrichtung weist zumindest einen Spülrohrkörper und einen sich entlang einer Hauptachse erstreckenden, an dem Spülrohrkörper festgelegten Stützkörper sowie einen ersten und zweiten Anschlussflansch auf. Die Anschlussflansche sind derart ausgebildet, dass sie mit in dem Wasserhausanschluss für den Einbau eines herkömmlichen Trinkwasserzählers vorhandenen Anschlusseinrichtungen kompatibel sind und die Spül- und Probenahmevorrichtung dadurch über die Anschlusseinrichtungen angeschlossen werden kann. Dabei ist der erste Anschlussflansch an einem eine Einlassöffnung aufweisenden, eingangsseitig angeordneten ersten Ende des Spülrohrkörpers vorgesehen und der koaxial zu dem ersten Anschlussflansch angeordnete zweite Anschlussflansch ist an dem Stützkörper vorgesehen. Der Spülrohrkörper weist an einem ausgangsseitig angeordneten, zweiten Ende eine Auslassöffnung zum Abführen von Spülwasser auf.

Im montierten Zustand ist die Spül- und Probenahmevorrichtung zum Spülen des Wasserhausanschlusses mittels des ersten und zweiten Anschlussflansches über die Anschlusseinrichtungen in den Wasserhausanschluss zwischen den Absperrarmaturen eingebaut und angeschlossen und im Spülbetrieb strömt das Spülwasser über die Einlassöffnung in einer Spülwassereinströmrichtung in den Spülrohrkörper ein und wird über die Auslassöffnung in einer Spülwasserausströmrichtung ausgeleitet. Ein von Spülwasser durchströmter Strömungsweg in dem Spülrohrkörper ist durch eine hinterschneidungsfreie Spülrohrwandung begrenzt.

Die erfindungsgemäße Spül- und Probenahmevorrichtung, welche im weitesten Sinne Y-förmig ausgebildet ist, kann nach baulicher Fertigstellung eines Hausanschlusses, nämlich eines Wasserhausanschlusses bzw. eines Trinkwasseranschlusses, zwischen den im Wasserhausanschluss vorhandenen Absperrarmaturen montiert werden. Als Absperrarmatur ist im Sinne der vorliegenden Erfindung jede für diesen Zweck üblicherweise verwendete Absperreinrichtung oder Absperreinheit zu verstehen, wobei derartige Absperreinrichtungen oder Absperreinheiten beispielsweise in Form von Schiebern, Klappen, Ventilen oder dergleichen ausgebildet sein können. Diese Absperreinrichtungen oder Absperreinheiten bilden dabei eine Hauptabsperrvorrichtung wie sie gemäß der geltenden "Verordnung über Allgemeine Bedingungen für die Versorgung mit Wasser" (AVBWasserV §10, Absatz 1) gefordert ist.

Die Montage der erfindungsgemäßen Spül- und Probenahmevorrichtung erfolgt dabei anschließend an die erste Absperrarmatur des Wasserhausanschlusses, nämlich anschließend an den die Hauptabsperreinrichtung bildenden ersten Schieber nach Gebäudeeintritt und gleichzeitig vor der zweiten Absperrarmatur, welche beispielsweise durch einen so genannten Keil-Flachschieber gebildet ist. Als zweite Absperrarmatur können auch bekannte Freistromventile mit Rückflussverhinderer (KFR-Ventil) verwendet werden. Vorzugsweise ist die erfindungsgemäße Spül- und Probenahmevorrichtung dazu ausgebildet direkt anschließend an die erste Absperrarmatur montiert zu werden, alternativ können aber auch Längenausgleichsstücke vorgesehen sein, die an die Spül- und Probenahmevorrichtung ankoppelbar und somit zwischen den Absperrarmaturen und der Spül- und Probenahmevorrichtung einsetzbar sind.

Mit der erfindungsgemäßen Spül- und Probenahmevorrichtung kann der Wasserhausanschluss bzw. die Trinkwasseranschlussleitung gespült werden, wobei das Wasser oder Spülwasser den Spülrohrkörper in einer vorgegebenen Strömungsrichtung oder Spülrichtung auf einem Strömungsweg durchströmt. Über den Stützkörper können besonders vorteilhaft die auftretenden Schubkräfte in Fließ- bzw. Strömungsrichtung des Wassers abgefangen werden. Beispielsweise kann der Stützkörper als Rohrstück ausgebildet sein.

Für eine insbesondere einfache Montage ist die Spül- und Probenahmevorrichtung mit den zwei koaxial zueinander ausgerichteten sowie koaxial zur Hauptachse orientierten Anschlussflanschen ausgestattet, nämlich mit dem ersten Anschlussflansch am ersten Ende des Spülrohrkörpers und mit dem zweiten Anschlussflansch am Stützkörper, wobei die Anschlussflansche derart ausgebildet sind, dass sie mit den entsprechend vorhandenen Anschluss- bzw. Verbindungsstücken des Wasserhausanschlusses kompatibel sind, welche für den Einbau eines Wasserzählers vorgesehen sind. Beispielsweise sind die Anschlussflansche durch genormte Flansche gebildet, vorzugsweise durch DIN Flansche.

Im Spülbetrieb gelangt das Spülwasser eingangsseitig über eine an einem ersten Ende angeordnete Einlassöffnung in den Spülrohrkörper hinein, wobei das erste Ende des Spülrohrkörpers über den ersten Anschlussflansch nach der ersten Absperrarmatur, gegebenenfalls nach einem direkt an die erste Absperrarmatur anschließenden bzw. angeschlossenen Längenausgleichsstück, an die zuführende Leitung des Wasserhausanschlusses angeschlossen ist, so dass eine fluide Verbindung zwischen Spülrohrkörper und Versorgungsleitung hergestellt ist. Das Spülwasser tritt ausgangsseitig an einer an einem zweiten Ende des Spülrohrkörpers angeordneten Austrittsöffnung wieder aus.

Die erfindungsgemäße Spül- und Probenahmevorrichtung ist insbesondere für Wasserhausanschlüsse vorgesehen, bei denen ein Trinkwasserzähler mit Flanschanschlüssen in herkömmlichen, gängigen Zählergrößen, beispielsweise mit gängigen Nennweiten DN 65/80/100/150/200 zu montieren ist. Vor Inbetriebnahme des Wasserhausanschlusses wird die Spül- und Probenahmevorrichtung an Stelle des Trinkwasserzählers zwischen den beiden vorgesehenen Absperrarmaturen eingesetzt und die Anschlussleitung bzw. der Wasserhausanschluss kann gespült werden. Die Spül- und Probenahmevorrichtung kann so lange an Stelle des Trinkwasserzählers in der Anschlussleitung verbleiben, bis die Anschlussleitung und damit auch das durch diese hindurch fließende Wasser die erforderliche Sauberkeit und Reinheit aufweist. Insbesondere ist die erfindungsgemäße Spül- und Probenahmevorrichtung so konzipiert, dass sie solange an Stelle des Trinkwasserzählers in der Anschlussleitung verbleibt, bis das Ergebnis der Trinkwasserprobe den gesetzlichen Vorgaben entspricht. Mit der erfindungsgemäßen Spül- und Probenahmevorrichtung ist damit vorteilhaft eine ordnungsgemäße Inbetriebnahme einer Trinkwasseranschlussleitung nach den geltenden Regeln der Technik möglich.

Vorteilhaft ist an dem zweiten Ende des Spülrohrkörpers eine Schlauchkupplung, insbesondere eine Schnellkupplung vorgesehen. Eine derartige Schnellkupplung kann zum Beispiel durch eine Storz-Kupplung oder eine Kamlock-Kupplung oder eine Perrot-Kupplung gebildet sein. Die Schlauchkupplung, welche vorliegend auch als Anschlusskupplung des Spülwasserabganges verstanden werden kann, weist dabei eine so große Dimensionierung auf, dass eine hinreichende Spülgeschwindigkeit bzw. Fließgeschwindigkeit des Spülwassers erzielt wird. Beispielsweise ist die Dimensionierung der Schlauchkupplung auf diejenige der vorgelegenen Rohrleitungen abgestimmt.

Vorteilhaft schließt eine die Einlassöffnung des Spülrohrkörpers aufnehmende erste Ebene und eine die Auslassöffnung des Spülrohrkörpers aufnehmende zweite Ebene einen spitzen Winkel ein. Im Sinne der vorliegenden Erfindung kann darunter auch verstanden werden, dass der Strömungsweg durch den Spülrohrkörper gebogen bzw. gekrümmt ausgeführt ist, wobei die Biegung bzw. Krümmung zumindest abschnittsweise einen Kreisbogenausschnitt beschreibt. Ebenso kann dies im Sinne der Erfindung so verstanden werden, dass eine Spülwassereinströmrichtung und eine Spülwasserausströmrichtung im Wesentlichen einen stumpfen Winkel einschließen. Dadurch kann eine zügige, gleichförmige Durchströmung erreicht werden sowie ein damit einhergehender effektiver Austrag von Schmutzstoffen bzw. -partikeln oder Verunreinigungen.

Gemäß einer bevorzugten Ausführungsform ist der Spülrohrkörper durch einen Rohrkrümmer gebildet. Alternativ oder additiv kann der Spülrohrkörper ebenso bevorzugt aus einem Rohrbogen und einem linearen Rohrstück zusammengesetzt sein.

Besondere Vorteile ergeben sich insbesondere im Hinblick auf eine einfache und kostengünstige Herstellung dadurch, dass der Stützkörper durch ein längliches Rohrelement gebildet ist, wobei sich das Rohrelement seiner Länge nach entlang der Hauptachse erstreckt. Besonders bevorzugt ist der Stützkörper dabei an dem Spülrohrkörper angeschweißt.

Um insbesondere vorteilhaft den Einbau der Spül- und Probenahmevorrichtung zwischen die Absperrarmaturen eines Wasserhausanschlusses mit einer genormten Bauform und -größe zu erleichtern, weist ein Flanschabstand zwischen den beiden Anschlussflanschen einen Wert auf, der einer für Trinkwasserzähler geltenden Normlänge entspricht, da die Spül- und Probenahmevorrichtung anstelle des Trinkwasserzählers in den Wasserhausanschluss integriert wird.

Ebenso vorteilhaft kann der Stützkörper jedoch auch längenverstellbar sein, derart, dass ein Flanschabstand zwischen den beiden Anschlussflanschen anpassbar ist. Beispielsweise kann der Stützkörper dabei stufenlos längenverstellbar und der Flanschabstand zwischen den beiden Anschlussflanschen individuell anpassbar sein. Alternativ ist es jedoch auch möglich, dass der Stützkörper mit einer vorgegebenen, festen Stufeneinstellung längenverstellbar und der Flanschabstand zwischen den beiden Anschlussflanschen daher in vorgegebenen Stufen variierbar ist. Mit der Längenverstellbarkeit kann beispielsweise eine Anpassung an Zwischengrößen oder Sonderbauformen von Wasserhausanschlüssen bzw. Trinkwasserzählern erfolgen. Beispielsweise kann eine stufenlose Verstellung dadurch realisiert werden, dass der Stützkörper durch zwei mittels Gewinde teleskopierbar ineinandergreifende Rohrabschnitte gebildet ist. Für eine feste Stufeneinstellung könnte beispielsweise eine Absteckung mittels Stiften vorgesehen sein.

Um besonders vorteilhaft Trinkwasserproben zur Prüfung der Wasserqualität entnehmen zu können, ist im Bereich des Spülrohrkörpers bevorzugt ein Probenentnahmehahn zur Entnahme von Wasserproben vorgesehen. Besonders bevorzugt ist der Probenentnahmehahn dabei aus einem gegenüber Reinigungs- und Desinfektionsmitteln resistenten Material hergestellt und ist ganz besonders bevorzugt abflammbar ausgebildet.

Gemäß einer bevorzugten Ausführungsvariante ist zum Verschließen der Schlauchkupplung ferner eine mit der Schlauchkupplung verbindbare, abschließbare Blindkupplung vorgesehen. Dadurch kann einer unerlaubten Entnahme von Trinkwasser aus dem Leitungsnetz durch Unberechtigte effektiv entgegengewirkt werden und der Wasserhausanschluss bzw. die Anschlussleitung kann gegen Vandalismus geschützt werden.

Besondere Vorteile ergeben sich darüber, dass ein von Spülwasser durchströmter Strömungsweg in dem Spülrohrkörper durch eine hinterschneidungsfreie Spülrohrwandung begrenzt ist. Darunter ist gemäß dem vorliegenden Verständnis insbesondere auch zu verstehen, dass der Strömungsweg keine von einer gleichmäßigen Durchströmung ausgenommenen Ecken, Ausbauchungen oder dergleichen aufweist und/oder dass die Spülrohrwandung im Wesentlichen ebenmäßig und glatt ausgeführt ist, so dass das durchströmenden Wasser entlang der gesamten Fläche der Wandung gleichmäßig entlangströmt. Insbesondere kann darüber eine sichere Reinigung und Desinfektion der Spül- und Probenahmevorrichtung nach deren Gebrauch gewährleistet werden. Vorteilhaft ist die Spül- und Probenahmevorrichtung, insbesondere nach erfolgter Reinigung, wiederverwendbar. Zur Herstellung der Spül- und Probenahmevorrichtung sind alle üblicherweise im Bereich von Wasserleitungen und/oder Wasserhausanschlüssen eingesetzten Materialien verwendbar. Insbesondere kommen dabei so genannte "trinkwasserechte" Materialien in Frage.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1a: eine grob schematische Übersichtsdarstellung eines Wasserhausanschlusses;
- Fig. 1b: der Wasserhausanschluss der Figur 1a, wobei der Trinkwasserzähler durch eine Spül- und Probenahmevorrichtung gemäß der Erfindung ersetzt ist;
- Fig. 2: schematisch dargestellt eine Ausführungsform der erfindungsgemäßen Spül- und Probenahmevorrichtung in einer seitlichen Ansicht und
- Fig. 3: schematisch dargestellt eine weitere Ausführungsform der erfindungsgemäßen Spül- und Probenahmevorrichtung in einer seitlichen Ansicht.

### Wege zur Ausführung der Erfindung

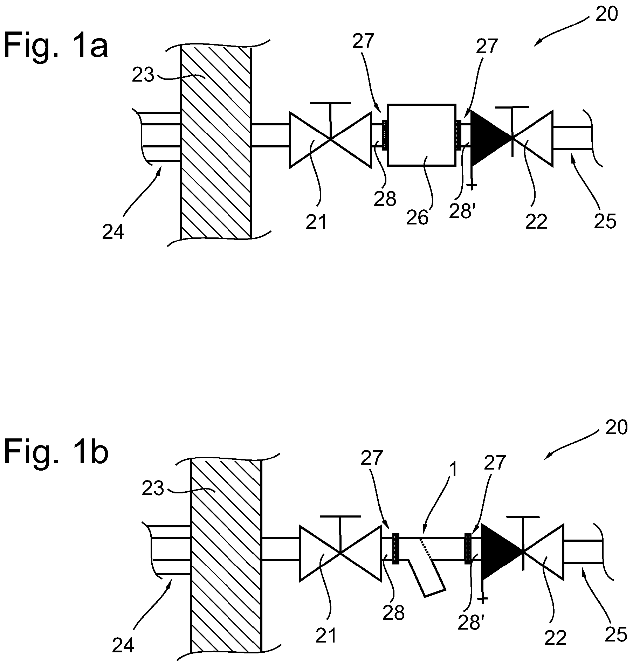

Die Figuren 1a und 1b zeigen jeweils in einem grob schematisch dargestellten Übersichtsdiagramm einen Wasserhausanschluss 20 zur Versorgung eines Gebäudes mit Trinkwasser aus einer zentralen Wasserversorgung. Bei einem herkömmlichen Wasserhausanschluss 20 gemäß Figuren 1a, 1b ist eine Versorgungsleitung 24 vorgesehen, über die das Trinkwasser von einem zentralen Versorger zugeführt werden kann. Die an einer Außenseite einer Gebäudewand 23 ankommende Versorgungsleitung 24 ist mittels einer Mauerdurchführung durch die Gebäudewand 23 hindurchgeführt. Nach Gebäudeeintritt ist innenseitig eine erste Absperrarmatur 21 vorgesehen, welche auch als erster Schieber bzw. als Hauptabsperreinheit bezeichnet werden kann und eine Hauptabsperrvorrichtung bildet wie sie gemäß der geltenden "Verordnung über Allgemeine Bedingungen für die Versorgung mit Wasser" (AVBWasserV §10, Absatz 1) gefordert ist. Im Anschluss an diese erste Absperrarmatur 21 ist ein Trinkwasserzähler 26 bzw. eine Wasseruhr vorgesehen, wie in Figur 1a dargestellt.

Nach dem Trinkwasserzähler 26 ist eine zweite Absperrarmatur 22 angeordnet, an der im dargestellten Beispiel ein hausinternes Leitungssystem 25, nämlich die Kundenanlage bzw. Hausinstallation anschließt, welche vorliegend auch als Haus-Infrastruktur bzw. Haus-Leitungsinfrastruktur bezeichnet werden kann. Optional können der zweiten Absperrarmatur 22 weitere Armaturen, wie z.B. Sicherungseinrichtungen, Ventileinheiten, Filtereinheiten, Entkalkungsanlagen, Wasseraufbereiter oder dergleichen nachgeschaltet sein. Die zweite Absperrarmatur 22 ist beispielsweise in Form eines Keilflachshiebers ausgeführt.

In der Darstellung der Figur 1b ist der Trinkwasserzähler 26 durch eine Spül- und Probenahmevorrichtung 1 gemäß der vorliegenden Erfindung ersetzt. Die Spül- und Probenahmevorrichtung 1 ist dabei über die für den Einbau eines herkömmlichen Trinkwasserzählers 26 vorgesehenen Anschlusseinrichtungen 27 in den Leitungsabschnitten 28, 28' angeschlossen. Die Anschlusseinrichtungen 27 können vorliegend auch als Anschlussstutzen oder Verbindungsstücke oder Halterungen verstanden werden.

Der Einbau der Spül- und Probenahmevorrichtung 1 in einen neu erstellten oder sanierten Wasserhausanschluss 20 erfolgt auf insbesondere einfache Weise, indem bei geschlossenen bzw. abgesperrten Absperrarmaturen 21, 22 der Trinkwasserzähler 26 entfernt und durch die Spül- und Probenahmevorrichtung 1 ersetzt wird.

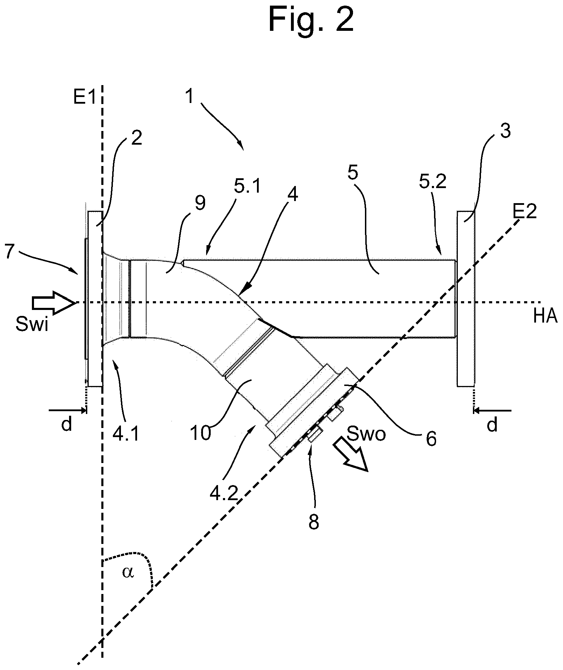

Figur 2 zeigt schematisch dargestellt eine Ausführungsform der Spül- und Probenahmevorrichtung 1 in einer seitlichen Ansicht. Die Spül- und Probenahmevorrichtung 1 umfasst einen Spülrohrkörper 4 und einen an dem Spülrohrkörper 4 festgelegten und sich seiner Länge nach entlang einer Hauptachse HA erstreckenden länglichen Stützkörper 5. Der Stützkörper 5, welcher im dargestellten Beispiel durch ein Rohrstück gebildet ist, ist dabei mit einem dem Spülrohrkörper 4 zugewandten Befestigungsende 5.1 an den Spülrohrkörper 4 angeschweißt. Der Spülrohrkörper 4 und der daran befestigte Stützkörper 5 weisen somit im weitesten Sinne die Form eines Y auf und bilden einen im Wesentlichen Y-förmigen Körper.

Zur Montage zwischen den beiden Absperrarmaturen 21, 22 des Wasserhausanschlusses 20 (siehe Figur 1b) weist die Spül- und Probenahmevorrichtung 1 einen ersten Anschlussflansch 2 sowie einen koaxial dazu ausgerichteten zweiten Anschlussflansch 3 auf, wobei die beiden Anschlussflansche 2, 3 koaxial zur Hauptachse HA orientiert sind. Der erste Anschlussflansch 2 ist dabei an einem ersten Ende 4.1 des Spülrohrkörpers 4 vorgesehen und der zweite Anschlussflansch 3 ist an dem Stützkörper 5 angeordnet, und zwar an einem dem Befestigungsende 5.1 gegenüberliegenden freien Ende 5.2 des Stützkörpers 5. Die zur Befestigung zwischen den beiden Absperrarmaturen 21, 22 des Wasserhausanschlusses dienenden Anschlussflansche 2,3 sind beispielsweise durch so genannte DIN-Flansche (z.B. DIN EN 1092-1 Typ 11 Form B1 PN16) gebildet.

Die beiden Anschlussflansche 2, 3 sind bei der dargestellten Ausführungsform gemäß Figur 2 in einem vorgegebenen Flanschabstand d zueinander angeordnet. Der Flanschabstand d entspricht dabei einer beispielsweise für gängige Trinkwasserzähler geltenden Normlänge. Beispielsweise entspricht die Bauform und -länge der Spül- und Probenahmevorrichtung 1, insbesondere der Flanschabstand d immer der jeweiligen Trinkwasserzählerlänge bzw. -form in Anlehnung an DIN EN ISO 4064-1.

Der Spülrohrkörper 4 des dargestellten Beispiels ist gebogen ausgeführt und ist aus einem Rohrbogen 9 und einem damit fest verbundenen linearen Rohrstück 10 in entsprechenden, aufeinander abgestimmten Dimensionierungen zusammengesetzt. Am ersten Ende 4.1 des Spülrohrkörpers 4 ist eine Einlassöffnung 7 vorgesehen, durch die das zugeführte Trinkwasser bzw. Spülwasser in einer Spülwassereinströmrichtung Swi in den Spülrohrkörper 4, insbesondere in einen im Inneren des Spülrohrkörpers 4 gebildeten Strömungsweg einströmt. An einem zweiten Ende 4.2 des Spülrohrkörpers 4 ist eine Auslassöffnung 8 vorgesehen, über die das durchgeströmte Spülwasser in einer Spülwasserausströmrichtung Swo aus dem Spülrohrkörper 4, insbesondere aus dem Strömungsweg abgeführt bzw. ausgeleitet wird.

Um ein besseres Abführen bzw. Ausleiten des Spülwassers zu erreichen, ist am zweiten Ende 4.2 des Spülrohrkörpers 4 im Bereich der Auslassöffnung 8 ferner eine Schlauchkupplung 6, insbesondere eine Schnellkupplung, beispielsweise in Form einer Storz-Kupplung vorgesehen, über die beispielsweise ein herkömmlicher Feuerwehrschlauch angekoppelt werden kann um das aus der Auslassöffnung 8 austretende Spülwasser in gewünschter Weise abzuleiten. Die Dimensionierung der Schlauchkupplung 6 ist an diejenige des Spülrohrkörpers 4 angepasst.

Im dargestellten Beispiel ist die Biegung bzw. Krümmung des Spülrohrkörpers 4 derart ausgebildet, dass eine die Einlassöffnung 7 aufnehmende erste Ebene E1 und eine die Auslassöffnung 8 aufnehmende zweite Ebene E2 einen spitzen Winkel α einschließen, im vorliegenden Beispiel einen Winkel α von rund 45°. Dies ist im Wesentlichen gleichbedeutend damit, dass die Spülwassereinströmrichtung Swi und die Spülwasserausströmrichtung Swo einen stumpfen Winkel, im vorliegenden Beispiel einen stumpfen Winkel von rund 135°, einschließen. Dadurch wird eine besonders effektive und gleichförmige Durchströmung erreicht.

Um insbesondere im Hinblick auf eine hygieneverträgliche Wiederverwendung der vorliegenden Spül- und Probenahmevorrichtung 1 nach erfolgter Benutzung bzw. nach Gebrauch eine effektive Reinigung durchführen zu können, werden insbesondere im Strömungsweg des Spülrohrkörpers 4 Hinterschneidungen vermieden, die Schmutzablagerungen bzw. Anheftungen begünstigen würden. Auch ist die Spül- und Probenahmevorrichtung 1 konstruktiv so ausgeführt, dass eine Desinfektion der gesamten Spül- und Probenahmevorrichtung 1 möglich ist.

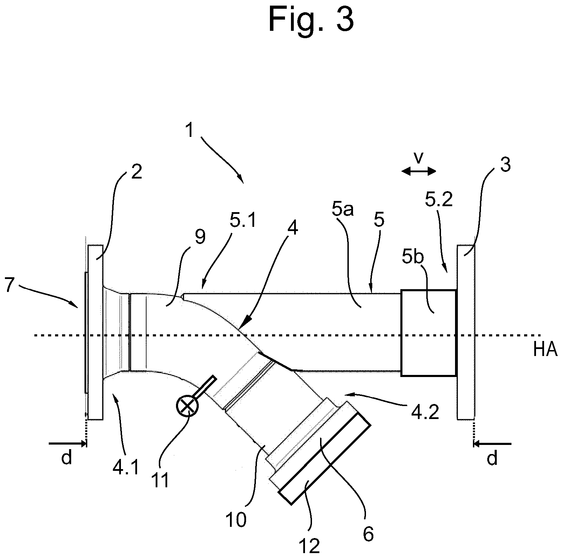

Figur 3 zeigt eine weitere bevorzugte Ausführungsform der Spül- und Probenahmevorrichtung 1, die im Wesentlichen derjenigen der Figur 2 entspricht, die jedoch stufenlos längenverstellbar ausgeführt ist, und zwar derart, dass ihre Länge entlang der Hauptachse HA und damit der Flanschabstand d veränderlich ist. Im dargestellten Beispiel wird dies dadurch erreicht, dass der schubkraftaufnehmende Stützkörper 5 durch zwei ineinander angeordnete und mittels Gewindeeingriff zusammenwirkende Rohrstücke 5a, 5b gebildet ist, die innerhalb eines vorgegebenen Verstellbereiches durch Schraubbewegung im Wesentlichen teleskopartig in einer Verstellrichtung v gegeneinander bewegbar sind. Eine derartige Längenanpassung ist insbesondere vorteilhaft, um auch einen einfachen und erleichterten Einbau der Spül- und Probenahmevorrichtung 1 in Wasserhausanschlüsse 20 zu ermöglichen, bei denen Zwischengrößen oder Sonderbauformen von Trinkwasserzählern 26 in Verwendung sind.

Bei der Spül- und Probenahmevorrichtung 1 gemäß Figur 3 ist zur Entnahme von Trinkwasserproben zusätzlich ein abflammbarer Probenentnahmehahn 11 direkt an den Rohrbogen 9 des Spülrohrkörpers 4 angebracht. Zur Vermeidung von unerlaubter Entnahme von Trinkwasser aus dem Leitungsnetz sowie aus Schutzgründen gegenüber Vandalismus ist bei der dargestellten Ausführungsform ferner eine abschließbare Blindkupplung 12 vorgesehen, die mit der Schlauchkupplung 6 am zweiten Ende 4.2 des Spülrohrkörpers 4 gekoppelt werden kann.

### Bezugszeichenliste

- 1: Spül- und Probenahmevorrichtung
- 2: erster Anschlussflansch
- 3: zweiter Anschlussflansch
- 4: Spülrohrkörper
- 4.1: erstes Ende des Spülrohrkörpers
- 4.2: zweites Ende des Spülrohrkörpers
- 5: Stützkörper
- 5a, 5b: Rohrstücke
- 5.1: Befestigungsende des Stützkörpers
- 5.2: freies Ende des Stützkörpers
- 6: Schlauchkupplung
- 7: Einlassöffnung
- 8: Auslassöffnung
- 9: Rohrbogen
- 10: lineares Rohrstück
- 11: Probenentnahmehahn
- 12: abschließbare Blindkupplung

- 20: Wasserhausanschluss
- 21: erste Absperrarmatur
- 22: zweite Absperrarmatur
- 23: Gebäudewand
- 24: Versorgungleitung
- 25: hausinternes Leitungssystem
- 26: Trinkwasserzähler
- 27: Anschlusseinrichtungen
- 28, 28': Leitungsabschnitte

- d: Flanschabstand
- E1: erste Ebene
- E2: zweite Ebene
- HA: Hauptachse
- Swi: Spülwassereinströmrichtung
- Swo: Spülwasserausströmrichtung
- v: Verstellrichtung

## Patentansprüche

1. Spül- und Probenahmevorrichtung (1) zur Verwendung in einem Wasserhausanschluss (20) zum Spülen des Wasserhausanschlusses (20) sowie zur Entnahme von Wasserproben, wobei die Spül- und Probenahmevorrichtung (1) zur Montage zwischen einer ersten und einer zweiten Absperrarmatur (21, 22) des Wasserhausanschlusses (20) ausgebildet ist, wobei die Spül- und Probenahmevorrichtung (1) zumindest einen Spülrohrkörper (4) und einen sich entlang einer Hauptachse (HA) erstreckenden, an dem Spülrohrkörper (4) festgelegten Stützkörper (5) sowie einen ersten und zweiten Anschlussflansch (2, 3) aufweist, wobei die Anschlussflansche (2, 3) derart ausgebildet sind, dass sie mit in dem Wasserhausanschluss (20) für den Einbau eines herkömmlichen Trinkwasserzählers vorhandenen Anschlusseinrichtungen (27) kompatibel sind und die Spül- und Probenahmevorrichtung (1) dadurch über die Anschlusseinrichtungen (27) angeschlossen werden kann, wobei der erste Anschlussflansch (2) an einem eine Einlassöffnung (7) aufweisenden, eingangsseitig angeordneten ersten Ende (4.1) des Spülrohrkörpers (4) vorgesehen ist, wobei der koaxial zu dem ersten Anschlussflansch (2) angeordnete zweite Anschlussflansch (3) an dem Stützkörper (5) vorgesehen ist und wobei der Spülrohrkörper (4) an einem ausgangsseitig angeordneten, zweiten Ende (4.2) eine Auslassöffnung (8) zum Abführen von Spülwasser aufweist, wobei im montierten Zustand die Spül- und Probenahmevorrichtung (1) zum Spülen des Wasserhausanschlusses (20) mittels des ersten und zweiten Anschlussflansches (2, 3) über die Anschlusseinrichtungen (27) in den Wasserhausanschluss (20) zwischen den Absperrarmaturen (21, 22) eingebaut und angeschlossen ist und wobei im Spülbetrieb das Spülwasser über die Einlassöffnung (7) in einer Spülwassereinströmrichtung (Swi) in den Spülrohrkörper (4) einströmt und über die Auslassöffnung (8) in einer Spülwasserausströmrichtung (Swo) ausgeleitet wird, **dadurch gekennzeichnet, dass** ein solcher von Spülwasser durchströmter Strömungsweg in dem Spülrohrkörper (4) durch eine hinterschneidungsfreie Spülrohrwandung begrenzt ist.

2. Spül- und Probenahmevorrichtung (1) nach Anspruch 1, **dadurch gekennzeichnet, dass** an dem zweiten Ende (4.2) des Spülrohrkörpers (4) eine Schlauchkupplung (6), insbesondere eine Schnellkupplung vorgesehen ist.

3. Spül- und Probenahmevorrichtung (1) nach Anspruch 1 oder 2, **dadurch gekennzeichnet, dass** eine die Einlassöffnung (7) aufnehmende erste Ebene (E1) und eine die Auslassöffnung (8) des Spülrohrkörpers (4) aufnehmende zweite Ebene (E2) einen spitzen Winkel (α) einschließen.

4. Spül- und Probenahmevorrichtung (1) nach einem der vorhergehenden Ansprüche, **dadurch gekennzeichnet, dass** der Spülrohrkörper durch einen Rohrkrümmer gebildet ist und/oder aus einem Rohrbogen (9) und einem linearen Rohrstück (10) zusammengesetzt ist.

5. Spül- und Probenahmevorrichtung (1) nach einem der vorhergehenden Ansprüche, **dadurch gekennzeichnet, dass** der Stützkörper (5) durch ein längliches Rohrelement gebildet ist, wobei sich das Rohrelement seiner Länge nach entlang der Hauptachse (HA) erstreckt.

6. Spül- und Probenahmevorrichtung (1) nach einem der vorhergehenden Ansprüche, **dadurch gekennzeichnet, dass** der Stützkörper (5) an dem Spülrohrkörper (4) angeschweißt ist.

7. Spül- und Probenahmevorrichtung (1) nach einem der vorhergehenden Ansprüche, **dadurch gekennzeichnet, dass** ein Flanschabstand (d) zwischen den beiden Anschlussflanschen (2, 3) einen Wert aufweist, der einer für einen Trinkwasserzähler des Wasserhausanschlusses (20) geltenden Normlänge entspricht.

8. Spül- und Probenahmevorrichtung (1) nach einem der vorhergehenden Ansprüche 1 bis 6, **dadurch gekennzeichnet, dass** der Stützkörper (5) längenverstellbar ist, wobei ein Flanschabstand (d) zwischen den beiden Anschlussflanschen (2, 3) anpassbar ist.

9. Spül- und Probenahmevorrichtung (1) nach Anspruch 8, **dadurch gekennzeichnet, dass** der Stützkörper (5) stufenlos längenverstellbar und der Flanschabstand (d) zwischen den beiden Anschlussflanschen (2, 3) individuell anpassbar ist oder dass der Stützkörper (5) mit vorgegebener, fester Stufeneinstellung längenverstellbar und der Flanschabstand (d) zwischen den beiden Anschlussflanschen (2, 3) in vorgegebenen Stufen variierbar ist.

10. Spül- und Probenahmevorrichtung (1) nach einem der vorhergehenden Ansprüche, **dadurch gekennzeichnet, dass** im Bereich des Spülrohrkörpers (4) ein Probenentnahmehahn (11) zur Entnahme von Wasserproben vorgesehen ist.

11. Spül- und Probenahmevorrichtung (1) nach einem der vorhergehenden Ansprüche 2 bis 10, **dadurch gekennzeichnet, dass** zum Verschließen der Schlauchkupplung (6) ferner eine mit der Schlauchkupplung (6) verbindbare, abschließbare Blindkupplung (12) vorgesehen ist.

12. Spül- und Probenahmevorrichtung (1) nach einem der vorhergehenden Ansprüche, **dadurch gekennzeichnet, dass** die Spül- und Probenahmevorrichtung (1) wiederverwendbar ist.

## Claims

1. Flushing and sampling device (1) for use in a water house connection (20) for flushing the water house connection (20) and for collecting water samples, wherein the flushing and sampling device (1) is designed for installation between a first and a second shut-off fitting (21, 22) of the water house connection (20), wherein the flushing and sampling device (1) has at least one flush pipe body (4) and a support body (5) extending along a main axis (HA) attached to the flush pipe body (4), and a first and a second connecting flange (2, 3), wherein the connecting flanges (2, 3) are designed in such manner that they are compatible with connection devices (27) present in the water house connection (20) for the installation of a conventional drinking water meter, and consequently the flushing and sampling device (1) can be connected via the connection devices (27), wherein the first connection flange (2) is provided on a first end (4.1) of the flush pipe body (4), which is arranged on the inlet side and has an inlet opening (7), wherein the second connection flange (3), which is arranged coaxially with the first connection flange (2), is provided on the support body (5), and wherein the flush pipe body (4) has an outlet opening (8) arranged on a second end (4.2) at the outlet side for discharging flushing water, wherein in the mounted state the flushing and sampling device (1) is installed and connected between the shut-off fittings (21, 22) in the water house connection (20) via the connection devices (27) for flushing the water house connection (20) by means of the first and second connection flange (2, 3), and wherein in flushing operation the flushing water flows into the flush pipe body (4) through the inlet opening (7) in a flushing water inflow direction (Swi), and is discharged via the outlet opening (8) in a flushing water outflow direction (Swo), **characterized in that** such a flow path through which flush water flows is delimited in the flush pipe body (4) by a flush pipe wall free of undercuts.

2. Flushing and sampling device (1) according to Claim 1, **characterized in that** a hose coupling (6), particularly a quick coupling, is provided at the second end (4.2) of the flush pipe body (4).

3. Flushing and sampling device (1) according to Claim 1 or 2, **characterized in that** a first plane (E1) receiving the inlet opening (7) and a second plane (E2) receiving the outlet opening (8) of the flush pipe body (4) enclose an acute angle (α).

4. Flushing and sampling device (1) according to any one of the preceding claims, **characterized in that** the flush pipe body is formed by a pipe curvature and/or is assembled from a pipe bend (9) and a straight pipe section (10).

5. Flushing and sampling device (1) according to any one of the preceding claims, **characterized in that** the supporting body (5) is formed by an elongated pipe element, wherein the pipe element extends along the main axis (HA) according to its length.

6. Flushing and sampling device (1) according to any one of the preceding claims, **characterized in that** the supporting body (5) is welded to the flush pipe body (4).

7. Flushing and sampling device (1) according to any one of the preceding claims, **characterized in that** a flange distance (d) between the two connection flanges (2, 3) has a value that corresponds to a standard length valid for a drinking water meter of the water house connection (20).

8. Flushing and sampling device (1) according to any one of the preceding Claims 1 to 6, **characterized in that** the support body (5) is length adjustable, wherein a flange distance (d) between the two connection flanges (2, 3) is adaptable.

9. Flushing and sampling device (1) according to Claim 8, **characterized in that** the support body (5) is continuously length adjustable and the flange distance (d) between the two connection flanges (2, 3) is individually adaptable, or that the support body (5) is length adjustable with predetermined, fixed step adjustment and the flange distance (d) between the two connection flanges (2, 3) is variable in predetermined steps.

10. Flushing and sampling device (1) according to any one of the preceding claims, **characterized in that** a sampling cock (11) is provided in the region of the flush pipe body (4) for drawing water samples.

11. Flushing and sampling device (1) according to any one of the preceding Claims 2 to 10, **characterized in that** a lockable blind coupling (12) which can be connected to the hose coupling (6) is further provided in order to close off the hose coupling (6).

12. Flushing and sampling device (1) according to any one of the preceding claims, **characterized in that** the flushing and sampling device (1) is reusable.

## Revendications

1. Dispositif de rinçage et d'échantillonnage (1), destiné à être utilisé dans un raccordement d'eau (20) domestique pour rincer le raccordement d'eau (20) domestique, ainsi que pour prélever des échantillons d'eau, le dispositif de rinçage et d'échantillonnage (1) étant conçu pour être monté entre une première et une deuxième robinetteries d'arrêt (21, 22) du raccordement d'eau (20) domestique, le dispositif de rinçage et d'échantillonnage (1) comportant au moins un corps tubulaire (4) de rinçage et un corps d'appui (5) s'étendant le long d'un axe principal (HA), immobilisé sur le corps tubulaire (4) de rinçage, ainsi qu'une première et une deuxième brides de raccordement (2, 3), les brides de raccordement (2, 3) étant conçues de telle sorte qu'elles soient compatibles avec des systèmes de raccordement (27) présents dans le raccordement d'eau (20) domestique, pour l'intégration d'un compteur d'eau potable conventionnel et le dispositif de rinçage et d'échantillonnage (1) pouvant être raccordé à leur aide par l'intermédiaire des systèmes de raccordement (27), la première bride de raccordement (2) étant prévue sur une première extrémité (4.1) du corps tubulaire (4) de rinçage comportant un orifice d'admission (7), placé du côté entrée, la deuxième bride de raccordement (3) placée de manière coaxiale par rapport à la première bride de raccordement (2) étant prévue sur le corps d'appui (5)
et le corps tubulaire (4) de rinçage comportant sur une deuxième extrémité (4.2), placée côté sortie un orifice d'évacuation (8), destiné à évacuer de l'eau de rinçage, lorsqu'il est monté, pour rincer le raccordement d'eau (20) domestique au moyen de la première et de la deuxième brides de raccordement (2, 3), le dispositif de rinçage et d'échantillonnage (1) étant intégré et raccordé par l'intermédiaire des systèmes de raccordement (27) dans le raccordement d'eau (20) domestique, entre les robinetteries d'arrêt (21, 22) et en mode rinçage, l'eau de rinçage affluant par l'intermédiaire de l'orifice d'admission (7) dans une direction d'affluence d'eau de rinçage (Swi) dans le corps tubulaire (4) de rinçage et par l'intermédiaire de l'orifice d'évacuation (8) étant expulsée dans une direction d'échappement d'eau de rinçage (Swo), **caractérisé en ce qu'**un tel trajet d'écoulement irrigué par de l'eau de rinçage dans le corps tubulaire (4) de rinçage est délimité par une paroi de tube de rinçage dénuée de contre-dépouille.

2. Dispositif de rinçage et d'échantillonnage (1) selon la revendication 1, **caractérisé en ce que** sur la deuxième extrémité (4.2) du corps tubulaire (4) de rinçage est prévu un raccord pour tuyau (6), notamment un raccord rapide.

3. Dispositif de rinçage et d'échantillonnage (1) selon la revendication 1 ou 2, **caractérisé en ce qu'**un premier plan (E1) recevant l'orifice d'admission (7) et un deuxième plan (E2) recevant l'orifice d'évacuation (8) du corps tubulaire (4) de rinçage incluent un angle aigu (α).

4. Dispositif de rinçage et d'échantillonnage (1) selon l'une quelconque des revendications précédentes, **caractérisé en ce que** le corps tubulaire de rinçage est constitué d'un coude et / ou se compose d'un arceau tubulaire (9) et d'une pièce tubulaire (10) linéaire.

5. Dispositif de rinçage et d'échantillonnage (1) selon l'une quelconque des revendications précédentes, **caractérisé en ce que** le corps d'appui (5) est constitué d'un élément tubulaire oblong, l'élément tubulaire s'étendant par sa longueur le long de l'axe principal (HA).

6. Dispositif de rinçage et d'échantillonnage (1) selon l'une quelconque des revendications précédentes, **caractérisé en ce que** le corps d'appui (5) est soudé sur le corps tubulaire (4) de rinçage.

7. Dispositif de rinçage et d'échantillonnage (1) selon l'une quelconque des revendications précédentes, **caractérisé en ce qu'**un écart (d) de brides entre les deux brides de raccordement (2, 3) présente une valeur qui correspond à une longueur normalisée en vigueur pour un compteur d'eau potable du raccordement d'eau (20) domestique.

8. Dispositif de rinçage et d'échantillonnage (1) selon l'une quelconque des revendications précédentes 1 à 6, **caractérisé en ce que** le corps d'appui (5) est ajustable en longueur, un écart (d) de brides entre les deux brides de raccordement (2, 3) étant adaptable.

9. Dispositif de rinçage et d'échantillonnage (1) selon la revendication 8, **caractérisé en ce que** le corps d'appui (5) est ajustable en longueur en continu et l'écart (d) de brides entre les deux brides de raccordement (2, 3) est individuellement adaptable ou **en ce que** le corps d'appui (5) est ajustable en longueur par réglage par niveaux fixes, prédéfinis et **en ce que** l'écart des brides (d) entre les deux brides de raccordement (2, 3) est variable selon des niveaux prédéfinis.

10. Dispositif de rinçage et d'échantillonnage (1) selon l'une quelconque des revendications précédentes, **caractérisé en ce que** dans la zone du corps tubulaire de rinçage (4), il est prévu un robinet de prélèvement (11) d'échantillons, destiné à prélever des échantillons d'eau.

11. Dispositif de rinçage et d'échantillonnage (1) selon l'une quelconque des revendications précédentes 2 à 10, **caractérisé en ce que** pour fermer le raccord pour tuyau (6), il est prévu par ailleurs un raccord aveugle (12) obturable, susceptible d'être assemblé avec le raccord de flexible (6).

12. Dispositif de rinçage et d'échantillonnage (1) selon l'une quelconque des revendications précédentes, **caractérisé en ce que** le dispositif de rinçage et d'échantillonnage (1) est réutilisable.
